## Europäisches Patentamt
## European Patent Office
## Office européen des brevets

(19)

(11) Publication number: **0 206 499**
A1

(12) ## EUROPEAN PATENT APPLICATION

(21) Application number: **86303678.6**

(51) Int. Cl.⁴: **B 01 D 53/34**

(22) Date of filing: **14.05.86**

(30) Priority: **14.05.85 JP 70059/85**

(43) Date of publication of application: **30.12.86**
**Bulletin 86/52**

(84) Designated Contracting States: **CH DE FR GB IT LI**

(71) Applicant: **ISHIKAWAJIMA-HARIMA JUKOGYO KABUSHIKI KAISHA, 2-1, Ote-machi 2-chome, Chiyoda-ku Tokyo 100 (JP)**

(72) Inventor: **Narisoko, Minoru, No. 7-1-19-202, Koganehara, Matsudo-shi Chiba-ken (JP)**
Inventor: **Nanbu, Tatsunori, No. 5-15-18 Okura Setagaya-ku, Tokyo-to (JP)**

(74) Representative: **Jennings, Nigel Robin et al, KILBURN & STRODE 30 John Street, London WC1N 2DD (GB)**

(54) **Removing hydrogen chloride gas from an exhaust gas.**

(57)   HCl gas contained in an exhaust gas flowing in a flue (1) is removed by injecting a dry absorbent, such as calcium hydroxide, into the flue against the direction of flow (2) of the exhaust gas through a plurality of nozzles (6, 7, 8) whose orifices (6a, 7a, 8a) are spaced apart over the cross-section of the flue.

EP 0 206 499 A1

ACTORUM AG

## REMOVING HYDROGEN CHLORIDE GAS
## FROM AN EXHAUST GAS

------------------------------------

The invention relates to a method of removing HCl (hydrogen chloride) gas from an exhaust gas containing HCl gas flowing in a flue and is concerned with such a method which comprises injecting a dry absorbent which reacts with the HCl into the flue. The invention is concerned also with a device for the dry removal of a HCl gas from an exhaust gas flowing in a flue and with a flue including such a removal device.

Municipal waste products or refuse now generally include plastics materials and when these are burned in an incinerator the exhaust gases discharged from the latter contain a proportion of HCl gas which is an undesirable environmental pollutant. In order to minimise or prevent atmospheric pollution, the concentration of HCl gas in the exhaust gases must be reduced to as low a value as possible.

Conventional HCl removal devices are in general divided into those of dry type and those of wet type. Wet HCl removal devices are of complex construction and require an additional installation for processing the discharged water. There has therefore been a substantial demand for dry HCl removal devices whose HCl removal rate is equal to or higher than that of wet type HCl removal devices.

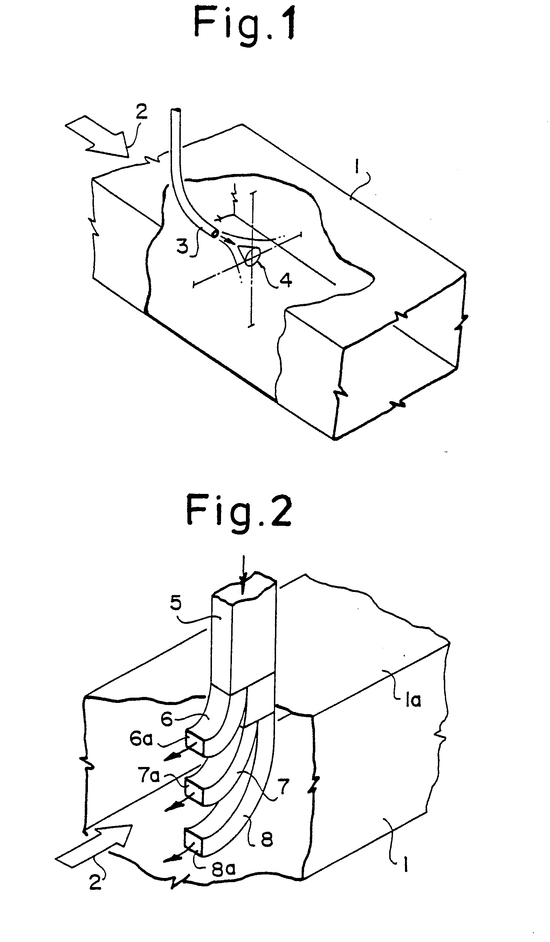

Figure 1 is a partly cut-away perspective view of a known dry type HCl removal device within an incinerator flue 1. A nozzle 3 disposed within the flue discharges an absorbent in the direction of the flow of the exhaust gases 2 through the flue 1. A conical dispersing or diverging body 4 is disposed downstream of the nozzle 3. The absorbent discharged from the nozzle 3 impinges against the dispersion body 4 and is dispersed in all directions. The absorbent is thus brought into contact with the HCl gas in the exhaust gases and reacts with it so as wholly or largely to remove it.

However, the rate and uniformity of dispersion of the absorbent after impingement against the dispersion body 4 is affected by variations in flow rate of the exhaust gases flowing through the flue 1 which in turn are caused by variations in the combustion rate in the incinerator.

It is thus difficult to cause the absorbent to be dispersed uniformly at all times and thus the HCl removal rate cannot always be maintained at the optimum value.

It is an object of the invention to provide a method of removal HCl gas of the type referred to above in which the absorbent can be uniformly distributed in the flow of exhaust gas despite fluctuations in the flow rate whereby HCl gas can be removed with high efficiency at all times.

According to the present invention the method of the type referred to above is characterised in that the absorbent is injected into the flue against the direction of flow of the exhaust gas through a plurality of nozzles having nozzle orifices which are spaced apart over the cross-section of the flue. Thus in the method in accordance with the invention the absorbent is injected at a plurality of spaced points which are situated substantially at the same longitudinal position of the flow and instead of being injected in the same direction as the direction of flow of the exhaust gas it is injected in the opposite direction.

The invention embraces also a device for use in carrying out the method which includes a plurality of nozzles whose orifices are, in use, spaced apart over the cross-section of the flue and directed in a direction opposite the direction of flow of the gas. The nozzles are preferably all connected to a common nozzle body.

The invention embraces also a flue for conveying an exhaust gas containing HCl gas including a device of the type referred to above. The common nozzle body preferably extends through a wall of the flue, e.g. the top wall.

Further features, details and advantages of the present invention will be apparent from the following description of one preferred embodiment which is given with reference to Figures 2 to 10 of the accompanying drawings, in which:-

Figure 2 is a perspective view of a dry HCl removal device in accordance with the present invention;

Figure 3 is a side view thereof;

Figure 4 is a front view thereof;

Figure 5 is a sectional view taken on the line V-V in Figure 4;

Figure 6 is a sectional view taken on the line VI-VI in Figure 5;

Figure 7 is a longitudinal sectional view, on an enlarged scale, of the portion A in Figure 6;

Figure 8 is a view taken on the line VIII-VIII in Figure 5;

Figure 9 is a schematic diagram of an absorbent supply system for a device in accordance with the present invention; and

Figure 10 is a comparative graph illustrating the HCl removal rates of HCl removal devices of known type and in accordance with the present invention.

Referring firstly to Figures 2 to 8, reference numeral 1 denotes a flue of an incinerator or a flue carrying gases produced in the manufacture of soda or the treatment of plastics. The flue 1 has a square cross-section through which, in use, exhaust gases containing HCl gas flow in the direction indicated by the arrow 2. Disposed in the flue 1 is a nozzle body 5 for injecting an absorbent in counterflow relationship with the flow of exhaust gases 2.

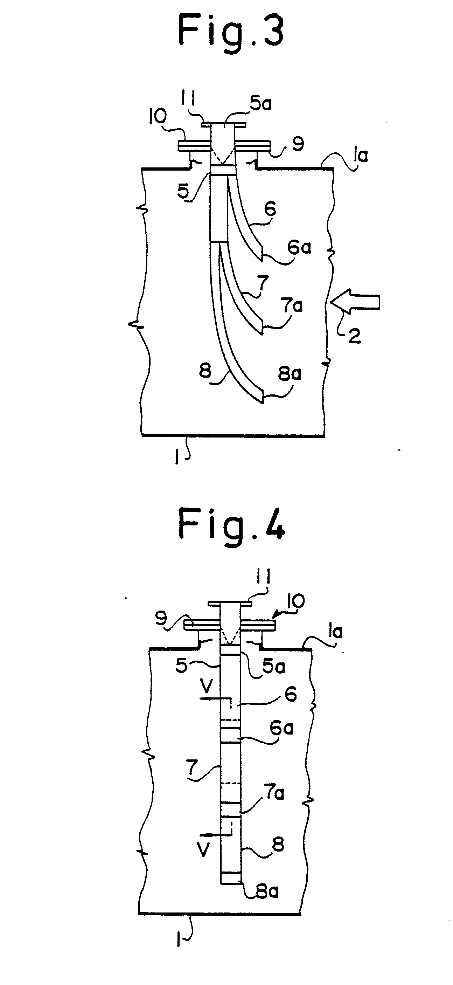

As best seen in Figures 3 and 4, the nozzle body comprises a base portion 5a extending upwardly beyond the top plate 1a of the flue 1, an upper nozzle 6, a centre nozzle 7 and a lower nozzle 8 all of which nozzles are connected to the base portion 5a and are curved so that their ends are directed against the direction of flow of the exhaust gases. The nozzles have respective ports 6a, 7a and 8a situated vertically above one another and spaced apart.

The top plate 1a of the flue is formed with a raised apertured flange 9 through which the nozzle body 5 is inserted while the base portion 5a of the nozzle body 5 is formed with a blind flange 10 which is secured to the flange 9. The upper end of the base portion 5a is formed with a flange 11 by which an absorbent supply pipe (not shown) may be connected to the nozzle body 5.

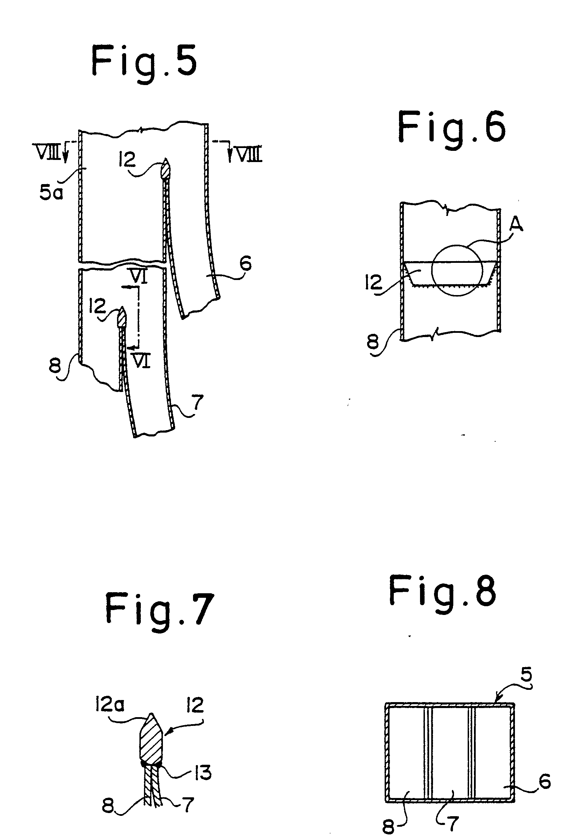

As best seen in Figures 5 to 8, the nozzles 6,7 and 8 are branched from the base portion 5a of the nozzle body and are tapered at upper surfaces 12a of the junction 12 between each nozzle and the base portion 5a are inclined at about 30° to the vertical so that the absorbent and the air carrying the absorbent which flow through the base portion 5a encounter less flow resistance. Each nozzle is welded to the associated junctions 12 at weld joints 13 do not extend outwardly beyond the junctions 12, as best seen in Figure 7.

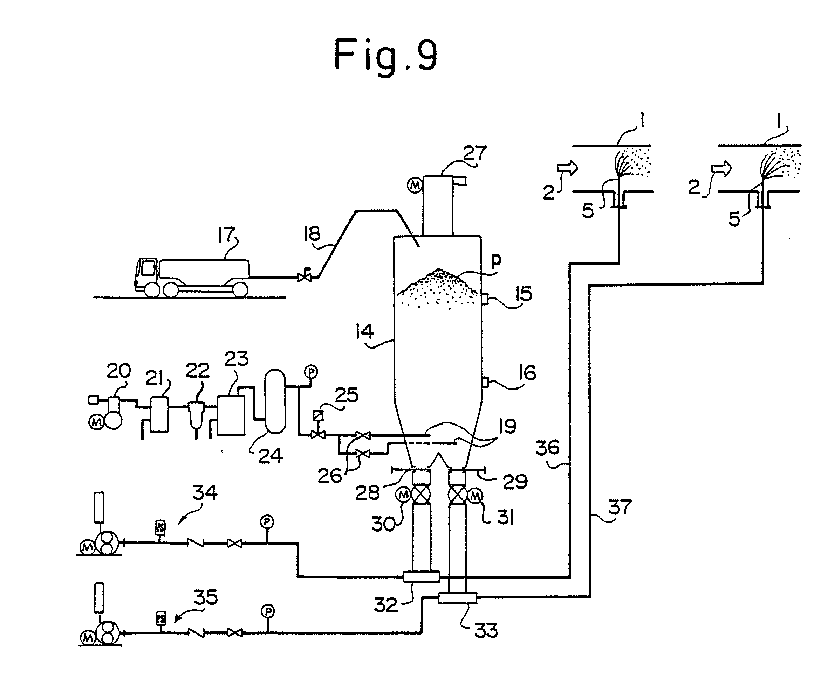

Figure 9 shows two independent flues 1, each with a respective nozzle body 5 through which absorbent, such as calcium hydroxide is supplied. The absorbent is stored in a silo 14 to whose outer surface an upper level meter 15 and a lower level meter 16 are attached. In response to the readings of the level meters 15 and 16, the absorbent p is charged through a feed pipe 18 from a tank truck 17 into the silo 14. Aeration pipes 19 extend into the lower portion of the silo 14 to fluidise the absorbent p therein. Air is supplied to the pipes 19 from a compressor 20 through a cleaning separator 21, a main line filter 22, an air drier 23, an air tank 24, a solenoid control valve 25 and gate valves 26. The air is discharged from the silo 14 through a bag filter 27 at the top of the silo.

The absorbent p in the silo 14 is fluidised by the air from the pipes 19 and is charged into first and second ejectors 32 and 33 through first and second gate valves 28 and 29 at the lower end of the silo 14 and through rotary valves 30 and 31, respectively. Thereafter, the absorbent is entrained in air supplied through air feed pipes 36 and 37 from air sources 34 and 35 and supplied to the nozzle bodies 5. The absorbent thus supplied is sprayed in counterflow relationship with the exhaust gas flow 2, as described above.

More particularly, the absorbent p is discharged through the nozzle ports 6a, 7a and 8a which are vertically spaced apart by a suitable distance in the flue 1 and are directed against the exhaust gas flow 2. Therefore, even when the flow rate of the exhaust gas flow 2 varies, the absorbent can be uniformly dispersed so that the HCl removal rate can be increased.

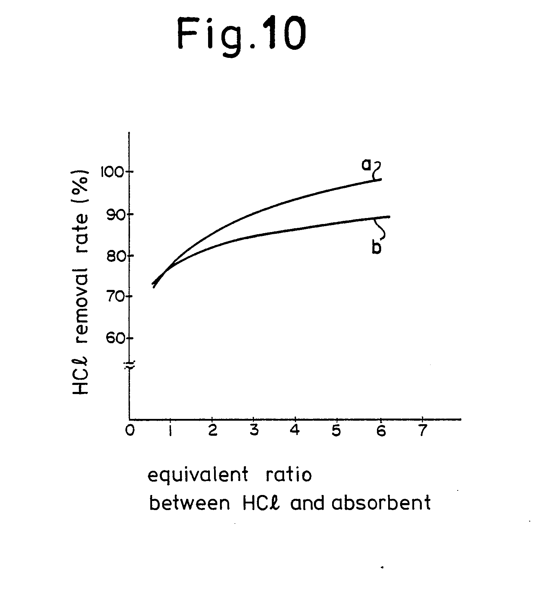

Figure 10 shows the relationship between the equivalent ratio (absorbent :HCl) and the HCl removal rate. Curve a relates to HCl removal by a device in accordance with the invention while curve b relates to HCl removal by a conventional device of the type shown in Figure 1. The concentration of HCl in the exhaust gases flowing through the flue 1 was 600 ppm and calcium hydroxide was used as the absorbent.

According to the present invention, when calcium hydroxide is injected at an equivalent ratio of 2.0 into exhaust gases containing a concentration of 600 ppm (corrected to $O_2$ content 12% in flue gas) of HCl, the HCl content in the exhaust gases can be decreased to 100 ppm (in terms of $O_2$ 12%). Therefore the HCl removal rate attained by the present invention is as high as 85% or higher. When the equivalent ratio is further increased, the HCl removal rate increases to more than 95%.

On the other hand, when using a conventional HCl removal device of the type shown in Figure 1, the HCl removal rate is about 80% at an equivalent ratio of 2.0, as indicated by the characteristic curve b, and even when the equivalent ratio is increased, the HCl removal rate does not increase substantially. In order to attain an HCl removal rateof 85%, the equivalent ratio must be 3.5. This means that the consumption of calcium hydroxide is increased or that the present invention enables the consumption of the absorbent to be decreased in order to attain the same HCl removal rate.

In the construction described above there are three vertically spaced nozzles but it will be appreciated that there may be four or more nozzles and that the nozzles may be spaced horizontally or indeed in any manner which is consistent with uniform distribution of the absorbent in the flue. In addition, two or more nozzle bodies 5 may be disposed in the same flue 1. Instead of calcium hydroxide, calcium oxide or calcium carbonate maey be of course used.

CLAIMS

1. A method of removing HCl gas from an exhaust gas containing HCl gas flowing in a flue comprising injecting a dry absorbent which reacts with the HCl in the flue, characterised in that the absorbent is injected into the flue (1) against the direction of flow (2) of the exhaust gas through a plurality of nozzles (6,7,8) having nozzle orifices (6a,7a,8a) which are spaced apart over the cross-section of the flue.

2. A flue for conveying an exhaust gas containing HCl gas in a first direction including a device for removing the HCl gas, the device including a nozzle through which, in use, a dry absorbent is injected into the gas flow, characterised in that the device includes a plurality of nozzles (6,7,8) whose nozzle orifices (6a,7a,8a) are spaced apart over the cross-section of the flue (1) and directed in a second direction opposite to the first direction (2).

3. A flue as claimed in claim 2, characterised in that the nozzles (6,7,8) are all connected to a common nozzle body (5) which passes through a wall of the flue (1).

4. A device for removing HCl gas from an exhaust gas containing HCl gas flowing in a flue, the device including a nozzle through which, in use, a dry absorbent is injected into the gas flow, characterised in that the device includes a plurality of nozzles (6,7,8) whose nozzle orifices (6a,7a,8a) are, in use, spaced apart over the cross-section of the flue (1) and directed in a direction opposite to the direction of flow of the gas.

5. A device as claimed in claim 4 characterised in that the nozzles (6,7,8) are all connected to a common nozzle body (5).

# Fig.1

# Fig.2

# Fig.3

# Fig.4

# Fig.5

# Fig.6

# Fig.7

# Fig.8

# Fig.9

# Fig.10

equivalent ratio
between HCl and absorbent

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 534 831  (AIR INDUSTRIE) <br> * Claims 1,2,5; figure 2 * | 1,4 | B 01 D  53/34 |
| X | DE-A-3 102 277  (H. HÖLTER) <br> * Claim 1; figures * | 1,2,4 | |

TECHNICAL FIELDS SEARCHED (Int. Cl.4)

B 01 D  53/00

The present search report has been drawn up for all claims

| Place of search | Date of completion of the search | Examiner |
|---|---|---|
| THE HAGUE | 05-09-1986 | POLESAK, H.F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82